# EUROPEAN PATENT APPLICATION

(11) **EP 1 672 273 A2**
(43) Date of publication of application: **21.06.2006**
(21) Application number: 05077371.2
(22) Date of filing: 13.10.2005
(51) Int. Cl.: F21S 10/00, F21S 10/02, F21V 9/10, H04N 9/31

(54) **Improved projection system or lighting device**

(30) Priority: 20.12.2004 US 636859 P
(71) Applicant: Barco, naamloze vennootschap., 8500 Kortrijk (BE)
(72) Inventor: Colpaert, Chris, 9920 Lovendegem (BE)
(74) Representative: Donné, Eddy

(57) **Abstract**

Projection system or lighting device which is provided of a color sequential device as for example a color wheel (6), a rotating prism or other, wherein the color sequential device consists of a combination of at least one of the primary colors Red, Green and Blue with at least one of the secondary colors Cyan, Magenta and Yellow.

## Description

At present, color sequential projection systems make use of a color sequential device as for example a color wheel, a rotating prism or other, which produces sequential Red, Green and Blue images in the case of RGB color wheels.

Sometimes, a white segment is included to increase the lumen output, i.e. RGBW color wheels.

This way of creating colored images has its origin in the video industry. In the lighting industry however, instead of using the primary colors Red, Green and Blue, the secondary colors are used: Cyan, Magenta and Yellow.

The problem of using such conventional projection or lighting device, be it with an RGB-color wheel or a CMY-color wheel or with any other conventional color sequential device, is that the color gamut is rather limited and far more reduced than the theoretical color gamut that can be obtained by combining the primary colors Red, Green and Blue.

As a consequence thereof, the conventional projection systems cannot be used in both market applications. Video applications require RGB-color wheels. Lighting applications require the use of CMY-color wheels.

In view of the above limitations, the invention concerns a projection system or lighting device which is provided of a color sequential device as for example a color wheel, a rotating prism or other, wherein the color sequential device consists of a combination of at least one of the primary colors Red, Green and Blue with at least one of the secondary colors Cyan, Magenta and Yellow.

The color sequential device can for example consist of a color-wheel that consists of a combination of all the primary colors: Red, Green and Blue; all the secondary colors: Magenta, Cyan, Yellow; and optionally also White.

Such a color wheel widens the color gamut of the projection system or lighting device according to the invention as compared to the color gamut of a conventional projection system using RGB-color wheels, and as compared with a conventional lighting device making use of a CMY-color wheel.

The new gamut is even wider than the simple unification of the gamut of a conventional RGB-wheel and of the gamut of a conventional CMY-wheel.

Indeed, by combining one or more of the primary colors with one or more of the secondary colors, so called new colors can be obtained that could not be created by combining the primary colors, neither by combining the secondary colors.

A major advantage is that such a projection system or lighting device according to the invention can be used in both video applications and in lighting applications.

According to a special embodiment, the color sequential device consists of two color wheels, for example positioned one after the other, wherein the first color wheel consists of the primary colors and White, and wherein the second color wheel consists of the secondary colors and White.

Such projection system or lighting device can be used in pure video applications, more in particular by using the RGBW color wheel and by holding the CMYW-color wheel on White.

In the case of typical lighting applications, the RGBW-color wheel can be held on the White segment, and the CMYW-color wheel can be activated for sequentially showing the CMYW-segment.

If in special cases the purity of the primary and secondary colors is important, the device can switch between both color wheels.

The invention also concerns a color sequential device as for example a color wheel, a rotating prism or other, that can be applied in a projection system or lighting device according to the invention.

In order to better explain the characteristics of the invention, the following preferred embodiment is described as an example only, without being limitative in any way, with reference to the accompanying drawings, in which:
Figure 1 represents a schematic view of a color wheel consisting of a combination of the primary colors;
Figure 2 is a schematic view of a color wheel consisting of a combination of the secondary colors;
Figure 3 represents a conventional color diagram;
Figure 4 is a schematic view of a color wheel consisting of a combination of all the primary colors and all the secondary colors.

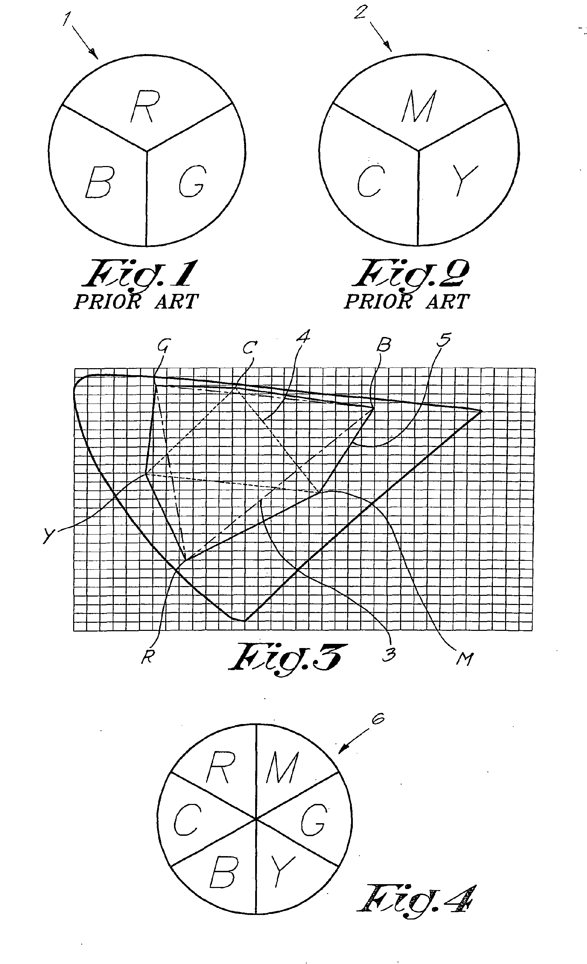

Figure 1 represents a conventional primary color wheel 1 consisting of three equal segments R, B and G, which represent respectively the primary colors Red, Green and Blue.

Such conventional RGB-color wheel is usually provided in traditional video projection systems.

Figure 2 represents a conventional secondary color wheel 2 consisting of three equal segments, in this case C, M and Y, which represent respectively the secondary colors Cyan, Magenta and Yellow.

The known CMY-color wheels are often provided in lighting devices.

Figure 3 represents a diagram wherein the theoretical gamut is outlined by the widest curve in bold.

When a conventional RGB-color wheel 1 is used, a reduced gamut is obtained, represented by a primary triangle 3 from which the corners are indicated as R, G and B, representing the Red, Green and Blue obtained by a conventional RGB color wheel 1.

All combinations of the three primary colors result in colors which can be represented by a point within said primary triangle 3.

In a similar way, when a conventional CMY-color wheel 2 is used, another reduced gamut is obtained represented by a secondary triangle 4 from which the corners are indicated as C, M and Y, representing the Cyan, Magenta and Green obtained by a conventional CMY-color wheel 2.

All combinations of the three secondary colors result in colors which can be represented by a point within said secondary triangle 4.

By combining for example all primary colors and all secondary colors, any color can be obtained which can be represented by a point within a hexagon 5 as defined by the six corners R, G, B, C, M and Y.

According to the invention and as shown in figure 4, a projection system or lighting device can be provided of a color wheel 6 consisting of in this case six equal segments of R, B, G, C, M and Y, which represent respectively the primary colors Red, Green and Blue, and respectively the secondary colors Cyan, Magenta and Yellow.

Referring to the diagram as shown in figure 3, this color wheel can create all combinations of said six colors. Each combination can be represented by a point within the hexagon 5 defined by said six colors.

The color gamut of the projection system or lighting device according to the invention provided of such a color wheel is wider than the color gamut of a conventional projection system using RGB-color wheels or using CMY-color wheels.

The new gamut is even wider than the simple superposition of the gamut of a conventional RGB-wheel and of the gamut of a conventional CMY-wheel. Indeed, the surface of the hexagonal 5 is wider than the surface of the superposed primary triangle 3 with the secondary triangle 4.

It should be clear that a projection system or lighting device according to the invention can also be provided of a color sequential device of another type, for example a rotating prism, and that the color sequential device may consist of a combination of at least one color chosen from the primary colors, and one color chosen from the secondary colors, and that it may optionally also contain White.

White is often added to increase the lumen output.

In the case of color wheels, not all segments need to be equal in dimension and the colors do not need to be applied in segments.

It is clear that the color sequential device can also consist of two or more color wheels, for example positioned one after the other, wherein the first color wheel can consist of the primary colors and White, and wherein the second color wheel can consist of the secondary colors and White.

Such projection system or lighting device can be used in pure video applications, more in particular by using the RGBW color wheel and by holding the CMYW color wheel on White.

In the case of typical lighting applications, the RGBW color wheel can be held on the White segment, and the CMYW color wheel can be activated for sequentially showing the CMYW segment.

If in special cases the purity of the primary and secondary colors is important, the device can switch between both color wheels.

It is clear that the two or more color wheels can also be used simultaneously, and the colors of the wheel closest to the light source can be activated by holding the further wheel or wheels on White.

The present invention is by no means limited to the above-described embodiment represented in the accompanying drawings; on the contrary, such a projection system or lighting device can be made in all sorts of shapes and dimensions while still remaining within the scope of the invention.

## Claims

1. Projection system or lighting device which is provided of a colour sequential device as for example a colour wheel (6), a rotating prism or other, **characterised in that** the colour sequential device consists of a combination of at least one of the primary colours Red, Green and Blue with at least one of the secondary colours Cyan, Magenta and Yellow.

2. Projection system or lighting device according to claim 1, **characterised in that** the colour sequential device consists of a combination of all the primary colours Red, Green and Blue with at least one of the secondary colours Cyan, Magenta and Yellow.

3. Projection system or lighting device according to claim 1, **characterised in that** the colour sequential device consists of a combination of at least one of the primary colours Red, Green and Blue with all the secondary colours Cyan, Magenta and Yellow.

4. Projection system or lighting device according to claim 1, **characterised in that** the colour sequential device consists of all the primary colours and all the secondary colours.

5. Projection system or lighting device according to claim 1, **characterised in that** the colour sequential device contains also White.

6. Projection system or lighting device according to claim 1,
**characterised in that** the colour sequential device consists of more than one colour wheel (1, 2, 6).

7. Projection system or lighting device according to claim 6, **characterised in that** the colour wheels (1, 2, 6) are positioned one after the other.

8. Colour sequential device as can be provided in a projection system or lighting device according to one or more of the claims 1 to 7.

9. Colour sequential device according to claim 8, **characterised in that** the colour sequential device is a colour wheel or a combination of colour wheels.

10. Colour sequential device according to claim 8, **characterised in that** the colour sequential device is a rotating prism.
